# EUROPEAN PATENT APPLICATION

(11) **EP 1 420 331 A1**
(43) Date of publication of application: **19.05.2004**
(21) Application number: 02257852.0
(22) Date of filing: 14.11.2002
(51) Int. Cl.: G06F 1/20, H05K 7/20

(54) **Miniature computer and method for heat sink**

(71) Applicant: Saint Song Corporation, Shen Keng Hsiang, Taipei Hsien (TW)
(72) Inventor: Lee Rong-You, Nei-Hu Dist, Taipei. (TW)
(74) Representative: Lloyd, Patrick Alexander Desmond

(57) **Abstract**

A miniaturized computer that rearranges each component in a computer housing to form a miniaturized computer comprising a motherboard, a low-speed interface, a high-speed interface and an input/output interface, and alters the design of conventional heat-dissipating mechanisms by separately allocating a heat-dissipating device and a fan for achieving the object of miniaturizing the size of computers, and by having an air-channeling device in accordance with the separate allocation, the heat-dissipating problem after computers being miniaturized is solved.

## Description

### BACKGROUND OF THE INVENTION

### FIELD OF THE INVENTION

The present invention relates to a miniaturized allocation of a computer and a heat-dissipating method thereof, more particularly, a miniaturized computer employing stackable motherboards and separable heat-dissipating mechanism, and a heat-dissipating method for the miniaturized computer by utilizing a separable heat-dissipating mechanism and an air-channeling device.

### DESCRIPTION OF RELATED ARTS

A conventional computer utilizes a plane-surface single-plate motherboard, thus occupying large plane surface area. Up to now the design of multi-board stackable allocation including a motherboard, a low-speed interface, a high-speed interface and an input/output interface has already been disclosed, such as US Patent No. 6,229,700 and the miniaturized computer manufactured by Saint Song Corp. basing upon the foregoing patent. Yet there are two drawbacks found in the miniaturized computer, first the conventional heat-dissipating mechanism by stacking the fan and the heat-dissipating fins is employed, therefore the thickness of the stackable board cannot be lower, thus requiring larger space; secondly, the conventional heat-dissipating mechanism is simply employed, therefore the problem of heat energy concentration caused by computer miniaturization cannot be solved.

### SUMMARY OF THE INVENTION

The present invention employs multi-board stackable allocation including a motherboard, a low-speed interface, a high-speed interface and an input/output interface, thus drastically reducing the area of single motherboard; also the separable heat-dissipating mechanism is employed, thus lowering half of the height of the motherboard. Therefore the total space required by the present invention is far less than that for the conventional computer host, and the space thereof is only half of that for the miniaturized computer manufactured basing upon the foregoing US Patent No. 6,229,700. In addition, the air-channeling device is utilized in accordance with the separable heat-dissipating mechanism, such design totally solves the heat-dissipating problem.

One object of the present invention is to provide with a miniaturized computer.

Another object of the present invention is to provide with a heat-dissipating method for a miniaturized computer.

Yet another object of the present invention is to provide with a miniaturized computer employing a stackable boards in accordance with a separableheat-dissipating mechanism.

Yet another object of the present invention is to provide with a miniaturized computer employing a stackable boards in accordance with an air-channeling device.

Yet another object of the present invention is to provide with a miniaturized computer employing an air-channeling device in accordance with a separable heat-dissipating mechanism.

Yet another object of the present invention is to provide with a miniaturized. computer formed by both stackable motherboard and separable heat-dissipating mechanism in accordance with an air-channeling device.

### BRIEF DESCRIPTION OF THE DRAWINGS

These and other features, aspects and advantages of the present invention will become better understood with regard to the following description, appended claims and accompanying drawings that are provided only for further elaboration without limiting or restricting the present invention, where:
Figure 1 shows a perspective sectional view of the conventional miniaturized computer;
Figure 2 shows a perspective sectional view of the present invention;
Figure 3 shows a front view of the present invention;
Figure 4 shows a rear view of the present invention;
Figure 5 shows a right side view of the present invention;
Figure 6 shows a left side view of the present invention;
Figure 7 shows a top plan view of the present invention; and
Figure 8 shows a bottom plan view of the present invention.

### DETAILED DESCRIPTION OF THE PREFERRED EMBODIMENTS

The following is a detailed description of the best presently known modes of carrying out the inventions. This description is not to be taken in a limiting sense, but is made merely for the purpose of illustrating the general principles of the inventions.

A miniaturized computer of the present invention comprising:
a motherboard;
a low-speed interface connected to said motherboard;
a high-speed interface connected to said motherboard;
an input/output interface connected to said motherboard;
a computer housing for covering said motherboard, said low-speed interface, said high-speed interface and said input/output interface,
wherein said motherboard comprising:
a heat-dissipating device for contacting a heat source on said motherboard directly or indirectly;
a fan for blowing out airflow so as to assist in dissipating heat energy accumulated by said heat-dissipating device;
characterized in that said miniaturized computer further includes an air-channeling device for covering the periphery of both said heat-dissipating device and said fan so as to enable airflow from said fan to blow out heat energy accumulated by said heat-dissipating device in an air-channeling direction of said air-channeling device.

The shape of the computer housing is identical to that of the common computer housing, only with the size thereof being altered to be in accordance with the size of the miniaturized computer.

The motherboard can be any conventional motherboard commonly utilized in miniaturized computers, for example, the motherboard comprises a CPU, a north bridge chipset, a south bridge chipset, a memory, a USB, a 13994 and main controllers, etc.

The low-speed interface, for example, comprises output ports for a CD-ROM, a printer, a keyboard, a mouse, an audio-video interface and a wireless interface.

The high-speed interface, for example, comprises output ports for a hard disk, a TV output, a UBS, a 13994 and audio effect.

The input/output interface, for example, comprises output ports for a power source control, an amplifier, a UBS, a 13994 and sound effect.

The heat-dissipating device can be any conventional computer heat-dissipating device such as aluminum extrusion, die casting and folding types of fins.

The fans can be any conventional computer fans or similar thereto.

The air-channeling device of the present invention can be any conventional ring-pole shape or ring-pole shape having one or more indentations substantially caused by peripheral surroundings, such as 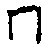 -type cover (in accordance with the motherboard to form substantially ring-pole shape) or motherboard formed as 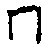 shape or L shape cover(in accordance with the motherboard and the side board of the computer housing to form substantially ring-pole shape).

The heat-dissipating mechanism formed by both the fan and the heat-dissipating device can be either vertically stackable or separable, preferably separable. As the separable heat-dissipating mechanism is employed, it is preferable for the heat-dissipating device to be mounted on a primary heat source (such as CPU), and for the fan to be mounted on a secondary heat source (such as north bridge chipset). Furthermore, a heat-conducting device can be disposed between the fan and the secondary heat source, such as heat-conductive metal plates, so as to further improve the heat-dissipating effect for the secondary heat source.

As the separable heat-dissipating mechanism is employed, the fan can be any kind of conventional fans utilized in computers, preferably fans blowing sideways or more preferably fans blowing sideways with a single air-blowing outlet. It is preferable for the heat-dissipating device to form a plurality of parallel heat-dissipating fins. Moreover, as the fan blowing sideways with a single air-blowing outlet and parallel heat-dissipating fins are employed, an air-blowing direction of the single air-blowing outlet of the fan blowing sideways and the direction of the parallel heat-dissipating fins are substantially identical or parallel to the air-channeling direction of the air-channeling device.

According to another embodiment of the present invention, a miniaturized computer comprising:
a motherboard;
a low-speed interface connected to said motherboard;
a high-speed interface connected to said motherboard;
an input/output interface connected to said motherboard;
wherein said motherboard comprising:
a plurality of heat-dissipating fins utilized for directly or indirectly contacting heat source;
a fan utilized for blowing airflow out so as to assist in dissipating heat energy accumulated by said heat-dissipating fins;
characterized in that said heat-dissipating fin and said fan are separable, said heat-dissipating fins being substantially parallel, said fan having a single air-blowing outlet with an air-blowing direction thereof substantially identical or parallel to a direction formed by the parallel heat-dissipating fins.

The foregoing motherboard, low-speed interface, high-speed interface, input/output interface, computer housing, heat-dissipating device and fans are as described in aforementioned paragraphs.

The miniaturized computer can further include an air-channeling device as described previously.

A heat-dissipating method for a miniaturized computer of the present invention comprising the following steps:
utilizing a fan to directly or indirectly contact a secondary heat source of a motherboard of said miniaturized computer, and heat energy generated by said secondary heat source is blown out by an air-blowing outlet of said fan;
utilizing a plurality of parallel fins to directly or indirectly contact a primary heat source of said motherboard of said miniaturized computer, partial or whole heat energy generated by said fan is blown out by airflow from said air-blowing outlet of said fan;
characterized in that said fan and said parallel fins are separable, and an air-blowing direction of said air-blowing outlet of said fan is substantially identical or parallel to the direction of parallel fins.

The foregoing motherboard, parallel fins, fan and air-channeling device are as described previously.

An air outlet can be disposed on the foregoing computer housing at the end of the air-channeling direction of the air-channeling device, so as to strengthen the air-channeling and heat-dissipating effects.

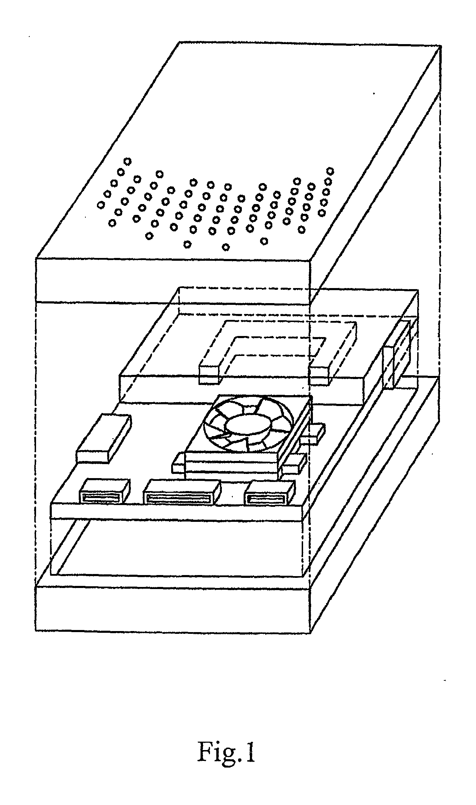

Figure 1 shows the conventional miniaturized computer, yet there are two drawbacks found in the foregoing miniaturized computer, first the conventional heat-dissipating mechanism by stacking the fan and the heat-dissipating fins is employed, therefore the thickness of the stackable boards cannot be lower, thus requiring larger area; secondly, the conventional heat-dissipating mechanism is simply employed, therefore the problem of heat energy concentration caused by computer miniaturization cannot be solved.

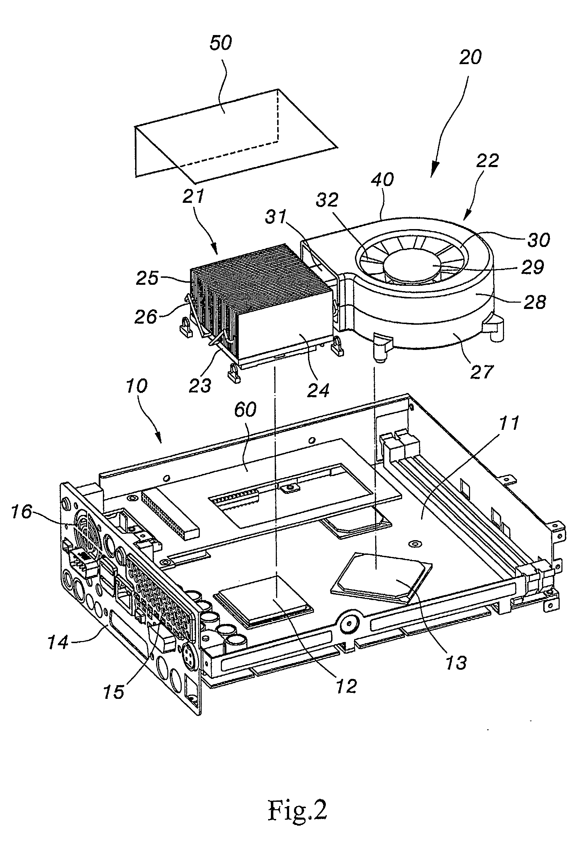

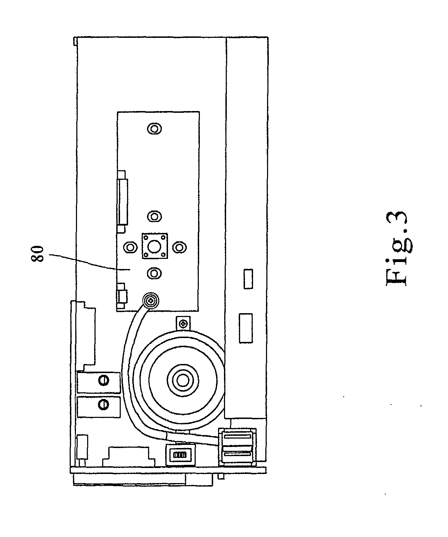

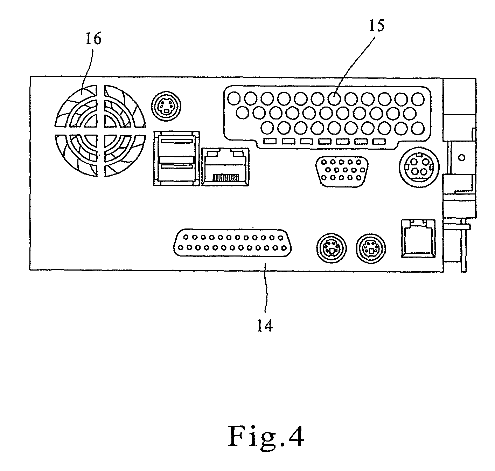

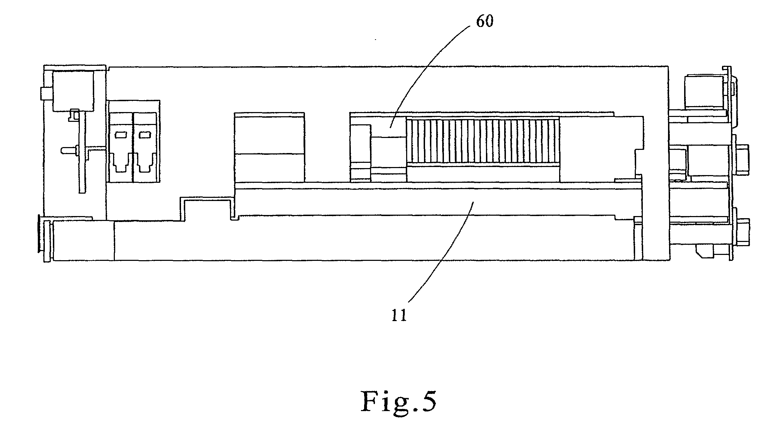

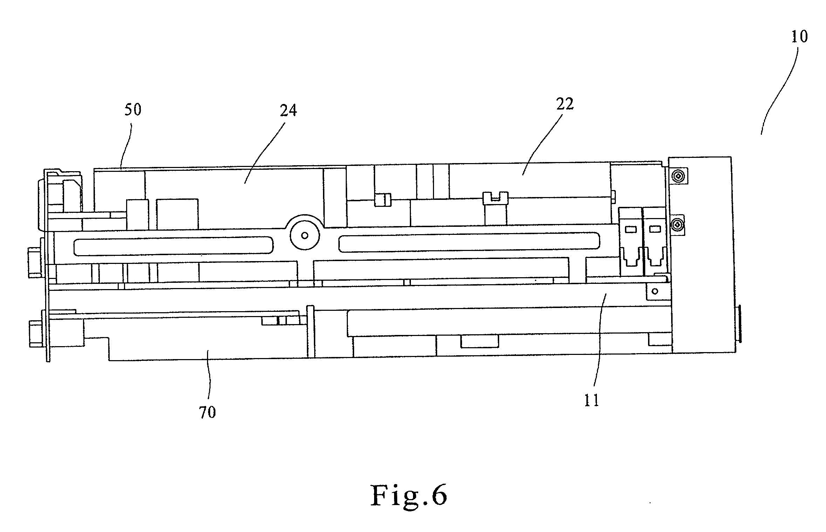

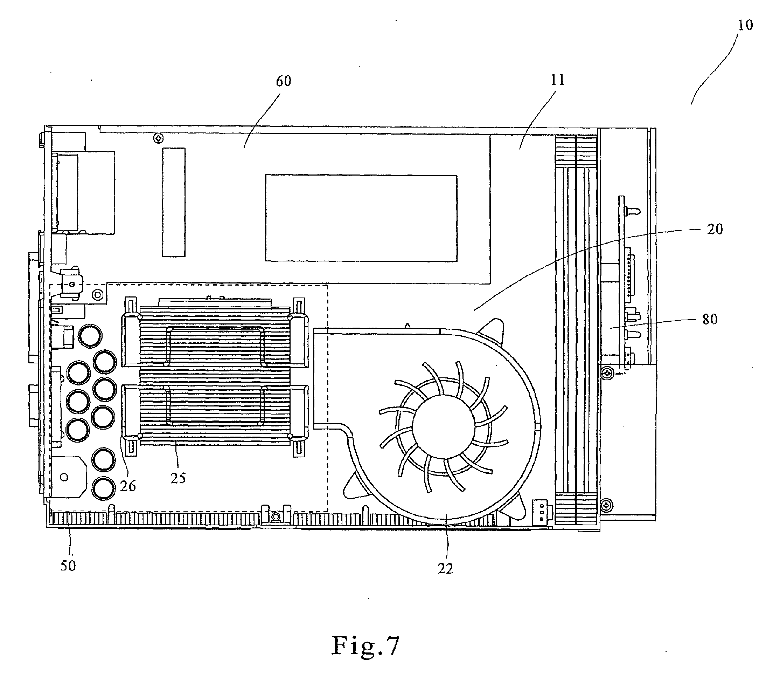

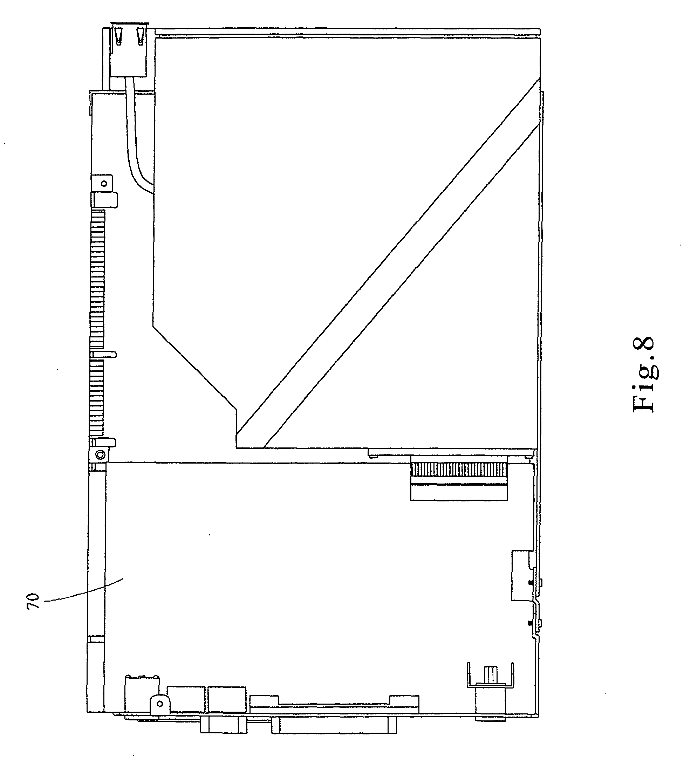

The preferred embodiments of the present invention are shown in Figures 2, 3, 4, 5, 6, 7 and 8. The present invention provides with a miniaturized computer comprising a motherboard 11, a low-speed interface 70, a high-speed interface 60, a computer housing 14 and an input/output interface 80, wherein the low-speed interface 70, the high-speed interface 60 and the input-output interface 80 are all connected to the motherboard 11. The motherboard 11 includes a heat-dissipating mechanism 20, more particularly, a heat-dissipating mechanism 20 mounted on the motherboard 11 within the computer host 10 for assisting two heat sources 12 and 13 in dissipating heat generated therefrom, wherein the primary heat source 12 is that like a CPU, whereas the secondary heat source 13 is that like a north bridge chipset which generates lower temperature than that of the primary heat source 12.

The heat-dissipating mechanism 20 comprises a heat-dissipating device 21 and a fan 22, wherein the heat-dissipating device 21 can be any type of aluminum extrusion, die casting and folding without limitation. The heat-dissipating device 21, made of effective heat-conducting material such as copper or aluminum, comprises a main body 23 having a plurality of fins 24 formed thereon, with fin grooves 25 between the fins 24 so as to expedite the flow of air. The bottom surface of the main body 23 of the heat-dissipating device 21 is attached to the heat surface of the primary heat source 12, and a proper fastening means 26 can be mounted for fastening the heat-dissipating device 21 stably on the surface of the primary heat source 12, so as to enable the heat-dissipating device 21 to assist the primary heat source 12 in dissipating heat.

The fan 22, disposed on the side of the heat-dissipating device 21, is in the identical direction or parallel to the fins 24. The fan 22 comprises a lower cover 27, an upper cover 28 and a fan-blade body 29, wherein the lower cover 27 is made of effective heat-conducting material such as copper or aluminum, and the upper cover 28 can be made of metal or plastic, The upper cover 28 is mounted on top of the lower cover 27 to be integrally jointed with one another by engagement or utilizing screws to fasten both together, thus forming a housing 40 for the fan 22. An air inlet 30 is mounted on the top of the housing 40 (namely the top of the upper cover 28), and a protruding air outlet 31 is disposed on one side of the housing 40 (namely one side of both the upper cover 27 and the lower cover 28). A containing chamber 32, disposed within the housing 40, is to link with both the air inlet 30 and the air outlet 31. The bottom surface of the lower cover 27 of the fan 22 is attached to the surface of the secondary heat source 13, and the lower cover 27 of the fan 22 is adequately fastened to the motherboard 11, so as to cause the direction of the air outlet 32 to be identical or parallel to the heat-dissipating direction of the heat-dissipating device 21.

The fan-blade body 29 is pivotally disposed within the containing chamber 32 of the housing 40, and a motor is disposed between the fan-blade body 29 and the housing 40 (not shown in drawings), so as to cause the fan-blade body 29 to rotate, during which air is drawn in through the air inlet 30 and discharged through the air outlet 31, so as to enable the fan to become a fan blowing sideways, An air-channeling device 50 covers the periphery of both the heat-dissipating device 21 and the fan 22 so as to enable airflow from the fan 22 to blow off and thus discharge heat energy accumulated by the heat-dissipating device 21 in the air-channeling direction of the air-channeling device 50, thus the heat-dissipating assembly structure of the present invention is formed thereby.

The heat-dissipating structure can be disposed within the computer host 10, and the heat-dissipating device 21 and the fan 22 is designed to be separate to each other, so as to enable the heat-dissipating device 21 and the fan 22 respectively attach to the primary heat source 12 and the secondary heat source 13. Heat energy generated by the secondary heat source 13 such as the north bridge chipset with lesser amount of heat generated can be transferred to the lower cover 27 of the fan 22, and with the rotation of the fan-blade body 29, cold air is to be introduced through the air inlet 30 on the top of the housing 40 of the fan 22, and warm air is to be discharged through the air outlet 31 on one side of the housing 40 of the fan 22, thus dissipating the heat generated by the secondary heat source 13.

Heat energy generated during operation of the primary heat source 12 such as CPU can be transferred to the heat-dissipating device 21, whereon a plurality of fins 24 are formed for increasing the heat-dissipating area so as to cope with the primary heat source 12 having higher rate of heat generation, thus the heat-dissipating efficiency can be improved. In addition, warm air discharged through the air outlet 31 on one side of the housing 40 can dissipate heat for the primary heat source 12 and the heat-dissipating device 21 which are both placed on the outside of the air outlet 31 having high temperature, and warm air discharged through the air outlet 31 of the housing 40 can flow through the fin groove 25, and then hot air is to be discharged out through the air-discharging outlet 15 previously mounted on the side surface of the computer housing 14 of the computer host 10. The shape of the air-discharging outlet 15 is not limited and can be varied according to different needs.

In addition, proper air inlet 16 can also be mounted on the computer housing 14 of the computer host 10, so as to draw cold air into the computer host 10. The shape of the air inlet 16 is not limited and can be varied according to different needs. Another fan (not shown in drawings) can be mounted on the air inlet 16 so as to forcibly draw in cold air, thus achieving better air circulation effect.

The lower cover 27 of the fan 22 of the present invention provides with heat-conducting and heat-dissipating effect, and the fan is designed to slantly dissipate heat, thus wind pressure shall be less, and heat energy can be swiftly discharged, so as to acquire better heat-dissipating efficiency and greater heat-dissipating capacity can be achieved. Furthermore, the computer heat-dissipating structure of the present invention is designed to be separate, so as to dissipate heat generated from both heat sources 12 and 13 simultaneously, thus better heat-dissipating efficiency can be achieved. With such simple structural design, the production cost shall not be increased and more space is not needed.

Moreover, the fan 22 of the present invention is disposed on the side of the heat-dissipating device 21, thus the overall height of the whole heat-dissipating mechanism 20 can be lowered, enabling the present invention to be applicable to computers having height limit.

In addition, the present invention actually discharges the high-temperature air generated by heat sources in a computer host such as the CPU and the north bridge chipset slantly from the computer host, and with external cold air drawn by the air inlet 16 into the computer host 10, better air circulation can be achieved.

Furthermore, an air-channeling device 50 covers the periphery of both the heat-dissipating device 21 and the fan 22, enabling airflow generated by the fan 22 to dissipate heat energy accumulated in the heat-dissipating device 21 in the air-channeling direction of the air-channeling device 50, thus improving upon the drawback of ineffective heat-dissipating condition within computer hosts and acquire better heat-dissipating efficiency.

Although the present invention has been described in considerable detail with reference to certain preferred embodiments thereof, those skilled in the art can easily understand that all kinds of alterations and changes can be made within the spirit and scope of the appended claims. Therefore, the spirit and scope of the appended claims should not be limited to the description of the preferred embodiments contained herein.

## Claims

1. A miniaturized computer comprising:
a motherboard;
a low-speed interface connected to said motherboard;
a high-speed interface connected to said motherboard;
an input/output interface connected to said motherboard;
a computer housing for covering said motherboard, said low-speed interface, said high-speed interface and said input/output interface,
wherein said motherboard comprising:
a heat-dissipating device for contacting a heat source on said motherboard directly or indirectly;
a fan for blowing out airflow so as to assist in dissipating heat energy accumulated by said heat-dissipating device;
**characterized in that** said miniaturized computer further includes an air-channeling device for covering the periphery of both said heat-dissipating device and said fan so as to enable airflow from said fan to blow out heat energy accumulated by said heat-dissipating device in an air-channeling direction of said air-channeling device.

2. The miniaturized computer as in claim 1, wherein said heat-dissipating device and said fan are designed to be separate, and said heat-dissipating device is mounted on a primary heat source, whereas said fan is mounted on a secondary heat source.

3. The miniaturized computer as in claim 2, wherein said heat-dissipating device has a plurality of heat-dissipating fins, and said fan blows slantly and substantially has a single air-blowing outlet and an air inlet.

4. The miniaturized computer as in claim 3, wherein said heat-dissipating fins are in parallel, and the direction of said heat-dissipating fins in parallel, the air-blowing direction of said single air-blowing outlet of said fan and said air-channeling direction of said air-channeling device are substantially identical or parallel to one another.

5. The miniaturized computer as in claim 1, wherein said air-channeling device is a 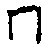 -shaped or an L-shaped cover.

6. The miniaturized computer as in claim 2, wherein said air-channeling device is a 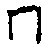 -shaped or an L-shaped cover.

7. The miniaturized computer as in claim 3, wherein said air-channeling device is a 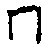 -shaped or an L-shaped cover.

8. The miniaturized computer as in claim 4, wherein said air-channeling device is a 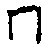 -shaped or an L-shaped cover.

9. A miniaturized computer comprising:
a motherboard;
a low-speed interface;
a high-speed interface; and
an input-output interface;
wherein said low-speed interface, said high-speed interface and said input-output interface are all connected to said motherboard; wherein said motherboard comprising:
a plurality of heat-dissipating fins for contacting a heat source on said motherboard directly or indirectly;
a fan for blowing out airflow so as to assist in dissipating heat energy accumulated by said plurality of heat-dissipating fins;
**characterized in that** said plurality of heat-dissipating fins and fan are designed to be separate, fins of said heat-dissipating fins being substantially parallel, and said fan has a single air-blowing outlet, the air-blowing direction of said air-blowing outlet and the direction of said parallel fins of said heat-dissipating fins being substantially identical or parallel.

10. The miniaturized computer as in claim 9, wherein said fan is to contact directly or indirectly to a secondary heat source, and said heat-dissipating fins are to contact a primary heat source.

11. The miniaturized computer as in claim 10, wherein a heat-conducting device is further disposed between said fan and said secondary heat source.

12. The miniaturized computer as in claim 11, wherein said heat-dissipating fins are to contact said primary heat source, and said heat-conducting device is to directly contact said secondary heat source.

13. The miniaturized computer as in claim 12 further including an air-channeling device for covering the periphery of both said heat-dissipating fins and said fan so as to enable airflow from said fan to blow out heat energy accumulated by said heat-dissipating fins in an air-channeling direction of said air-channeling device.

14. The miniaturized computer as in claim 13, wherein said air-channeling device is a 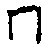 -shaped or an L-shaped cover.

15. A heat-dissipating method for a miniaturized computer comprising:
utilizing a fan to directly or indirectly contact a secondary heat source of a motherboard of said miniaturized computer, and heat energy generated by said secondary heat source being blown out by an air-blowing outlet of said fan;
utilizing a plurality of parallel fins to directly or indirectly contact a primary heat source of said motherboard of said miniaturized computer, partial or whole heat energy generated by said secondary heat source being blown out by airflow from said air-blowing outlet of said fan;
**characterized in that** said fan and said heat-dissipating fins are designed to be separate, and an air-blowing direction of said air-blowing outlet of said fan is substantially identical or parallel to the direction of said parallel fins.

16. The miniaturized computer as in claim 15, wherein a heat-conducting device is further disposed between said fan and said secondary heat source, and said parallel fins are to directly contact said primary heat source.

17. The miniaturized computer as in claim 15 further including an air-channeling device for directing said heat-dissipating airflow, wherein the air-blowing direction of said air blowing outlet of said fan and the direction of said parallel fins are substantially identical or parallel to the air-channeling direction of said air-channeling device.

18. The miniaturized computer as in claim 17, wherein said air-channeling device is a 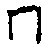 -shaped or an L-shaped cover.
